# EUROPÄISCHE PATENTSCHRIFT

(11) **EP 2 817 793 B1**
(45) Veröffentlichungstag und Bekanntmachung des Hinweises auf die Patenterteilung: **10.04.2019**
(21) Anmeldenummer: 13702916.1
(22) Anmeldetag: 01.02.2013
(51) Int. Cl.: G08G 1/017, G08G 1/0965, G06K 9/00, B60R 21/0132, G06T 7/90

(54) **VERFAHREN ZUM IDENTIFIZIEREN EINES FAHRZEUGS BEI EINER FAHRZEUG-ZU-FAHRZEUG-KOMMUNIKATION**
METHOD FOR IDENTIFYING A VEHICLE DURING VEHICLE TO VEHICLE COMMUNICATION
PROCÉDÉ D'IDENTIFICATION D'UN VÉHICULE DANS UNE COMMUNICATION DE VÉHICULE À VÉHICULE

(30) Priorität: 25.02.2012 DE 102012003776
(43) Veröffentlichungstag der Anmeldung: 31.12.2014
(73) Patentinhaber: Audi AG, 85045 Ingolstadt (DE); Volkswagen AG, 38436 Wolfsburg (DE)
(72) Erfinder: SIEGEL, Andreas, 85049 Ingolstadt (DE); RÖSSLER, Hendrik, 85051 Ingolstadt (DE)
(74) Vertreter: Schuster, Simon
(86) Internationale Anmeldenummer: PCT/EP2013/000301
(87) Internationale Veröffentlichungsnummer: WO 2013/124033

(56) Entgegenhaltungen:
- WO-A2-2007/047476
- DE-A1-102006 055 344
- DE-A1-102007 007 283
- DE-A1-102008 013 103
- US-A1- 2005 267 657
- US-A1- 2012 038 489

## Beschreibung

Die vorliegende Erfindung betrifft ein Verfahren zum Identifizieren eines ersten Fahrzeugs bei einer Fahrzeug-zu-Fahrzeug-Kommunikation. Überdies betrifft die vorliegende Erfindung ein Fahrzeug.

Die Fahrzeug-zu-Fahrzeug-Kommunikation, die auch als Car-to-Car-Kommunikation bezeichnet wird, ermöglicht den Austausch von Informationen und Daten zwischen zumindest zwei Fahrzeugen. Diese Informationen und Daten werden hierbei über Funk, beispielsweise über WLAN oder UMTS ausgetauscht. Neben dem Datenaustausch soll die Fahrzeug-zu-Fahrzeug-Kommunikation dazu genutzt werden, einem Fahrzeugführer rechtzeitig kritische und gefährliche Situationen zu melden. Bei der Fahrzeug-zu-Fahrzeug-Kommunikation sendet jedes Fahrzeug zyklisch Informationen über sich selbst aus, so dass andere Fahrzeuge im Umfeld diese Informationen nutzen können, und z. B. bei einem drohenden Unfall aktive Sicherheitssysteme entsprechend adaptieren können.

Die Fahrzeugdaten, die von den entsprechenden Fahrzeugen ausgesendet werden, können dabei eine Information bezüglich ihrer Position und ihrer Geschwindigkeit beinhalten, die mit einem GPS-basierten Ortungssystem des Fahrzeugs ermittelt wurden. Das Problem hierbei ist die begrenzte Genauigkeit der GPS-basierten Ortung und somit auch die Bestimmung der relativen Position des sendenden Fahrzeugs zu dem empfangenden Fahrzeug. Ein bekanntes Verfahren zur Verbesserung dieser Lagebestimmung sieht vor, dass die Informationen aus der Fahrzeug-zu-Fahrzeug-Kommunikation den Objekten der Umfeldsensorik des Fahrzeugs zugeordnet werden. Hierzu werden aus der ausgesendeten GPS-Position des sendenden Fahrzeugs die relative Lage zu dem empfangenden Fahrzeug berechnet und zusammen mit einer Geschwindigkeits-und Fahrtrichtungsinformation mit den Umfelddaten, die von dem Umfeldsensor erfasst wurden, assoziiert. Die über Fahrzeug-zu-Fahrzeug-Kommunikation übertragenen Daten werden also den Umfelddaten zugeordnet, um das sendende Fahrzeug zu identifizieren. Wenn allerdings die Informationen aus der GPS-basierten Ortung z. B. durch Abschattung im Innenstadtbereich relativ ungenau ist und dadurch mehrere Umfeldobjekte für die Zuordnung in Frage kommen, dann keine zuverlässige Zuordnung gewährleistet werden.

In der DE 10 2010 015 686 A1 ist eine Car-to-Car-Kommunikation beschrieben, die dazu genutzt wird, Messdaten von Umfeldsensoren eines Kraftfahrzeugs an ein anderes Kraftfahrzeug zu übertragen, damit dieses auf die von den Umfeldsensoren des anderen Kraftfahrzeugs erfassten Hindernisse reagieren kann.

Die EP 1 553 542 A2 beschreibt die Verwendung eines Informationsnetzes zum Datenaustausch zwischen Fahrzeugen, bei dem zwischen den Fahrzeugen Fahrerzustandsinformationen ausgetauscht werden. Diese Fahrerzustandsinformationen können eine Auskunft über die Aufmerksamkeit oder die Müdigkeit des Fahrers betreffen. Ebenso werden die aktuelle Position und die Geschwindigkeit des Fahrzeugs übertragen. Darüber hinaus ist es vorgesehen, auch technische Daten des Fahrzeugs zu übertragen.

Des Weiteren beschreibt die DE 10 2009 026 464 A1 ein Verfahren zum Bereitstellen einer Fahrzeug-zu-Fahrzeug-Kommunikation zwischen einem Eigenfahrzeug und zumindest einem Fremdfahrzeug, wobei den Fahrzeugen jeweils eine eindeutige Fahrzeug-Identifikationsadresse zugeordnet wird. Anhand dieser Fahrzeugidentifikationsadresse und einer Objekterkennungseinrichtung des Eigenfahrzeugs kann dieses die Fremdfahrzeuge identifizieren.

Zudem beschreibt die DE 10 2007 045 970 A1 eine Fahrzeugkommunikationseinrichtung mit der gefährliche Situationen vermieden werden sollen, die beispielsweise entstehen, wenn ein Fahrzeuglenker eine Selektion eines Fahrzeugs ausführt, an das er eine Mitteilung senden will. Hierbei ist es auch vorgesehen, dass die Nummernschilder von Fremdfahrzeugen mit einer Videokamera des Eigenfahrzeugs erfasst werden und die Fremdfahrzeuge anhand des Nummernschilds identifiziert werden. Des Weiteren ist es vorgesehen, dass zusätzlich zu den Mitteilungen entsprechende Informationen übermittelt werden, die die gegenwärtige Position, die Geschwindigkeit und die Art des Fahrzeugs, d.h. ob es sich um ein Fahrzeug mit großen Abmessungen oder um ein Fahrzeug mit Standardabmessungen handelt, übermittelt.

Schließlich beschreibt die DE 10 2007 007 283 A1 ein Verfahren zur Bestimmung von in der Fahrzeugumgebung befindlichen Fahrzeugen. Dabei wird ein Fahrzeug bereitgestellt, das ein Registrierungsinfosystem aufweist, das die Registrierinformation von im Umfeld befindlichen Fahrzeugen empfängt. Des Weiteren ist das Registrierungsinfosystem dazu ausgebildet, die empfangenen Registrierungsinformationen mit der von einem Umfelderfassungssystem erfassten Registrierinformation zu vergleichen.

Es ist Aufgabe der vorliegenden Erfindung, einen Weg aufzuzeigen, wie bei einer Fahrzeug-zu-Fahrzeug-Kommunikation ein Identifizieren eines Fahrzeugs besonders einfach und zuverlässig ermöglicht werden kann. Überdies soll ein entsprechendes Fahrzeug bereitgestellt werden.

Diese Aufgabe wird erfindungsgemäß durch ein Verfahren gemäß Patentanspruch 1 und durch ein Fahrzeug gemäß Patentanspruch 7 gelöst. Vorteilhafte Weiterbildungen der vorliegenden Erfindungen sind in den Unteransprüchen angegeben.

Das erfindungsgemäße Verfahren zum Identifizieren eines ersten Fahrzeugs bei einer Fahrzeug-zu-Fahrzeug-Kommunikation umfasst das Aussenden von Fahrzeugdaten durch zumindest ein erstes Fahrzeug, das Empfangen der ausgesendeten Fahrzeugdaten durch ein zweites Fahrzeug, das Erfassen des zumindest einen ersten Fahrzeugs anhand von mit einem Umfeldsensor des zweiten Fahrzeugs erfassten Umfelddaten und das Identifizieren des zumindest einen ersten Fahrzeugs mit dem zweiten Fahrzeug anhand der Fahrzeugdaten und der Umfelddaten, wobei die Fahrzeugdaten zumindest eine Information umfassen, die eine von außen erfassbare optische Eigenschaft des zumindest einen ersten Fahrzeugs betrifft, und die von außen erfassbare optische Eigenschaft des zumindest einen ersten Fahrzeugs anhand der Umfelddaten zum Identifizieren des zumindest einen ersten Fahrzeugs von dem zweiten Fahrzeugs überprüft wird. Dabei wird als die zumindest eine Information, die eine von außen erfassbare optische Eigenschaft des zumindest einen ersten Fahrzeugs betrifft, ein einen Reflexionsgrad von zumindest einer Außenfläche des zumindest einen ersten Fahrzeugs betreffender Reflexionswert ausgesendet, wobei der Reflexionswert die optischen Eigenschaften des Lacks des zumindest einen ersten Fahrzeugs betrifft.

Bei der Fahrzeug-zu-Fahrzeug-Kommunikation bzw. bei der Car-to-Car-Kommunikation sendet zumindest ein erstes Fahrzeug bzw. ein Fremdfahrzeug Fahrzeugdaten aus. Diese Fahrzeugdaten umfassen üblicherweise Informationen über die aktuelle Position, die Geschwindigkeit und die Fahrtrichtung des zumindest einen Fremdfahrzeugs. Diese Informationen können von einem satellitenbasierten Ortungssystem, wie beispielsweise GPS, stammen. Die ausgesendeten Daten werden von einem zweiten Fahrzeug bzw. dem Eigenfahrzeug erfasst. Zusätzlich erfasst das zweite Fahrzeug mit zumindest einem Umfeldsensor das Umfeld des zweiten Fahrzeugs und gewinnt dadurch entsprechende Umfelddaten. Anhand dieser Umfelddaten und der empfangenen Fahrzeugdaten kann ein sendendes Fremdfahrzeug im Umfeld des ersten Fahrzeugs erkannt bzw. identifiziert werden. Zusätzlich sollen die Fahrzeugdaten zumindest eine Information umfassen, die eine von außen erfassbare optische Eigenschaft des Fremdfahrzeugs betreffen. Diese von außen erfassbaren optischen Eigenschaften sollen insbesondere eine genauere Information über die Außenhülle des Fahrzeugs geben, als dies durch eine Information über die Abmessungen des Fremdfahrzeugs möglich wäre. Die von außen erfassbaren optischen Eigenschaften, die insbesondere ein Äußeres bzw. die Außenflächen des Fremdfahrzeugs betreffen, werden nun mit dem Umfeldsensor des Eigenfahrzeugs erfasst. Im Anschluss werden die mit dem Umfeldsensor erfassten Daten mit den empfangenen Fahrzeugdaten verglichen. Wenn die Fahrzeugdaten mit den Umfelddaten übereinstimmen, kann das Fremdfahrzeug von dem Eigenfahrzeug eindeutig identifiziert bzw. zugeordnet werden. Somit kann auf einfache Weise ein besonders exaktes Identifizieren eines Fahrzeugs bei einer Fahrzeug-zu-Fahrzeug-Kommunikation ermöglicht werden.

Zudem wird als die zumindest eine Information, die eine von außen erfassbare optische Eigenschaft des zumindest einen ersten Fahrzeugs betrifft, ein einen Reflexionsgrad von zumindest einer Außenfläche des zumindest einen ersten Fahrzeugs betreffender Reflexionswert ausgesendet. Der Reflexionswert betrifft die optischen Eigenschaften des Lacks des Fahrzeugs. Ebenso kann der Reflexionswert die anderen Außenflächen des Fahrzeugs betreffen. So kann beispielsweise unterschieden werden, ob an einer Außenfläche glänzende Metallflächen und/oder matte Kunststoffbereiche vorhanden ist. Somit kann das Fremdfahrzeug durch die optischen Eigenschaften der entsprechenden Bereiche der Außenhülle einfach und zuverlässig zugeordnet werden.

In einer Ausführungsform wird als die zumindest eine Information, die eine von außen erfassbare optische Eigenschaft des zumindest einen ersten Fahrzeugs betrifft, ein eine Farbe von zumindest einer Außenfläche des zumindest eine ersten Fahrzeug betreffender Farbwert ausgesendet. Ein solcher Farbwert kann die Farbe des Lacks des Fahrzeugs betreffen. Ebenso kann hier die Farbe von entsprechenden Außenteilen bzw. Außenflächen des Fahrzeugs berücksichtigt werden. Somit kann das Fremdfahrzeug in Abhängigkeit von dem Farbwert besonders präzise zugeordnet bzw. identifiziert werden.

In einer Ausgestaltung wird als die zumindest eine Information, die eine von außen erfassbare optische Eigenschaft des zumindest einen ersten Fahrzeugs betrifft, ein eine Kontur von zumindest einer Außenfläche des zumindest einen ersten Fahrzeug betreffender Konturwert ausgesendet. Ein solcher Konturwert kann entsprechende Informationen über den Verlauf bzw. die geometrische Formgebung der Konturen der Außenflächen des Fahrzeugs beinhalten. Dabei können insbesondere die Konturen bzw. Objektkonturen des Fahrzeugs berücksichtigt werden, die sie deutlich von anderen Fahrzeugen unterscheidet. Dieser Konturwert kann sich beispielsweise auf einen Frontbereich, die Form des Kühlergrills, die Ausgestaltung der Scheinwerfer oder auf einen Heckbereich des Fahrzeugs beziehen. Somit kann deutlich unterschieden werden, ob es sich beispielsweise um eine Limousine, ein Kombifahrzeug, ein Geländefahrzeug, ein Coupe, ein Cabrio oder dergleichen handelt. Anhand der Kontur können die Fahrzeuge deutlich unterschieden werden und somit von dem Eigenfahrzeug zuverlässig identifiziert werden.

Bevorzugt umfassen die Fahrzeugdaten zusätzlich eine Information von zumindest einem Identifikationselement des zumindest einen ersten Fahrzeugs und diese Informationen werden anhand der Umfelddaten zum Identifizieren des zumindest einen ersten Fahrzeugs von dem zweiten Fahrzeug überprüft. Ein solches Identifikationselement kann beispielsweise durch das Nummernschild des zumindest einen ersten Fahrzeugs gebildet sein. So kann eine Information über das Nummernschild - aus Datenschutzgründen gegebenenfalls nur eine Information über eine Prüfsumme des Nummernschilds - von dem Fremdfahrzeug an das eigene Fahrzeug gesendet werden. Das Eigenfahrzeug erfasst das Nummernschild des Fremdfahrzeugs durch seinen Umfeldsensor. Anhand der Umfelddaten und der Fahrzeugdaten, die von dem Fremdfahrzeug empfangen wurden, kann durch das Eigenfahrzeug das Fremdfahrzeug eindeutig identifiziert bzw. erkannt werden. Anstelle des Nummernschilds können auch speziell dafür ausgebildete Identifikationselemente vorgesehen sein, die beispielsweise an der Außenfläche des Fahrzeugs angeordnet sind. Dies kann durch einen entsprechenden Aufkleber ermöglicht werden. Dabei sind auch andere Objekte denkbar, die zur eindeutigen Identifikation des Fahrzeugs dienen.

Bevorzugt wird eine Fahrzeug-zu-Fahrzeug-Kommunikation zwischen dem zumindest einem ersten Fahrzeug und dem zweiten Fahrzeug in Abhängigkeit von dem Identifizieren des zumindest einen ersten Fahrzeugs vorgenommen. Wenn das Fremdfahrzeug - wie zuvor beschrieben - eindeutig erfasst bzw. identifiziert ist, kann die Fahrzeug-zu-Fahrzeug-Kommunikation entsprechend angepasst werden. So kann beispielsweise eindeutig festgestellt werden, welches Fremdfahrzeug momentan Daten und Informationen an das Eigenfahrzeug sendet. Ebenso können die von dem Eigenfahrzeug gesendeten Daten und Informationen genau an ein identifiziertes Fremdfahrzeug gesendet werden. Auf diese Weise kann die Fahrzeug-zu-Fahrzeug-Kommunikation einfacher und zuverlässiger gestaltet werden.

In einer bevorzugten Ausführungsform wird ein Fahrerassistenzsystem des zweiten Fahrzeugs in Abhängigkeit von dem Identifizieren des zumindest einen ersten Fahrzeugs angesteuert. Zusätzlich zu der Identifizierung des Fremdfahrzeugs kann mit dem beschriebenen Verfahren auch die Position des Fremdfahrzeugs genauer bestimmt werden. Diese Informationen können dazu genutzt werden, ein Fahrerassistenzsystem des Eigenfahrzeugs entsprechend anzusteuern. So kann beispielsweise ein Fahrerassistenzsystem in Form eines Bremsassistenten, eines Abstandsassistenten, eines Spurwechselassistenten oder dergleichen besonders präzise und zuverlässig angesteuert werden.

Das erfindungsgemäße Fahrzeug umfasst eine Empfangseinrichtung zum Empfangen von zumindest von einem weiteren Fahrzeug ausgesendeter Fahrzeugdaten, einen Umfeldsensor zum Erfassen des zumindest einen weiteren Fahrzeugs anhand dessen Umfelddaten, eine Recheneinrichtung, die mit der Empfangseinrichtung und dem Umfeldsensor gekoppelt ist, zum Identifizieren des zumindest einen weiteren Fahrzeugs anhand der Fahrzeugdaten und der Umfelddaten, wobei die Empfangseinrichtung dazu ausgebildet ist, Fahrzeugdaten zu empfangen, die zumindest eine Information umfassen, die eine von außen erfassbare optische Eigenschaft des zumindest einen weiteren Fahrzeugs betrifft und wobei das Fahrzeug eine Prüfeinrichtung umfasst, die dazu ausgebildet ist, die von außen erfassbare optische Eigenschaft des zumindest einen weiteren Fahrzeugs betrifft und wobei das Fahrzeug eine Prüfeinrichtung umfasst, die dazu ausgebildet ist, die von außen erfassbare optische Eigenschaft des zumindest einen weiteren Fahrzeugs anhand der Umfelddaten zu identifizieren des zumindest einen weiteren Fahrzeugs von dem Fahrzeug zu überprüfen. Die Empfangseinrichtung ist ferner dazu ausgebildet ist, als die zumindest eine Information, die eine von außen erfassbare optische Eigenschaft des zumindest einen weiteren Fahrzeugs betrifft, einen einen Reflexionsgrad von zumindest einer Außenfläche des zumindest einen weiteren Fahrzeugs betreffenden Reflexionswert zu empfangen, wobei der Reflexionswert die optischen Eigenschaften des Lacks des zumindest einen ersten Fahrzeugs betrifft.

Bevorzugt umfasst das Fahrzeug eine Speichereinrichtung, auf der Fahrzeugdaten gespeichert sind, die zumindest eine Information umfassen, die eine von außen erfassbare optische Eigenschaft des Fahrzeugs betrifft, und eine Sendeeinrichtung, die dazu ausgebildet ist, die Fahrzeugdaten auszusenden. Die zuvor beschriebenen Informationen, die eine Information über eine von außen erfassbare optische Eigenschaft des Fahrzeugs umfassen, können bereits bei der Herstellung des Fahrzeugs auf einer entsprechenden Speichereinrichtung hinterlegt werden. Diese Speichereinrichtung kann auch dazu ausgelegt sein, dass auch nach der Herstellung des Fahrzeugs entsprechende Informationen gespeichert werden können. Dies ist beispielsweise vorteilhaft, wenn an der Außenfläche des Fahrzeugs eine Änderung vorgenommen wird. Somit umfasst das Fahrzeug eine entsprechende Sendeeinrichtung und eine Empfangseinrichtung und kann somit an einer Fahrzeug-zu-Fahrzeug-Kommunikation teilnehmen. Dabei kann es entsprechende Informationen, die eine von außen erfassbare optische Eigenschaft des Fahrzeugs umfassen, von anderen Fahrzeugen empfangen und die Informationen betreffend das eigene Fahrzeug können ausgesendet werden.

Bevorzugt umfasst das Fahrzeug eine Videokamera als den Umfeldsensor. Durch eine Videokamera können die von außen optisch erfassbaren Eigenschaften des zumindest einen ersten Fahrzeugs bzw. des zumindest einen Fremdfahrzeugs besonders präzise bestimmt werden.

Die zuvor im Zusammenhang mit dem erfindungsgemäßen Verfahren beschriebenen Vorteile und Weiterbildungen können in gleicher Weise auf das erfindungsgemäße Fahrzeug übertragen werden.

Die vorliegende Erfindung wird nun anhand der beigefügten Zeichnungen näher erläutert. Dabei zeigen:
- Fig. 1: einen schematischen Ablaufplan des erfindungsgemäßen Verfahrens; und
- Fig. 2: eine schematische Darstellung des erfindungsgemäßen Kraftfahrzeugs.

Die nachfolgend näher beschriebenen Ausführungsbeispiele stellen bevorzugte Ausführungsformen der vorliegenden Erfindung dar.

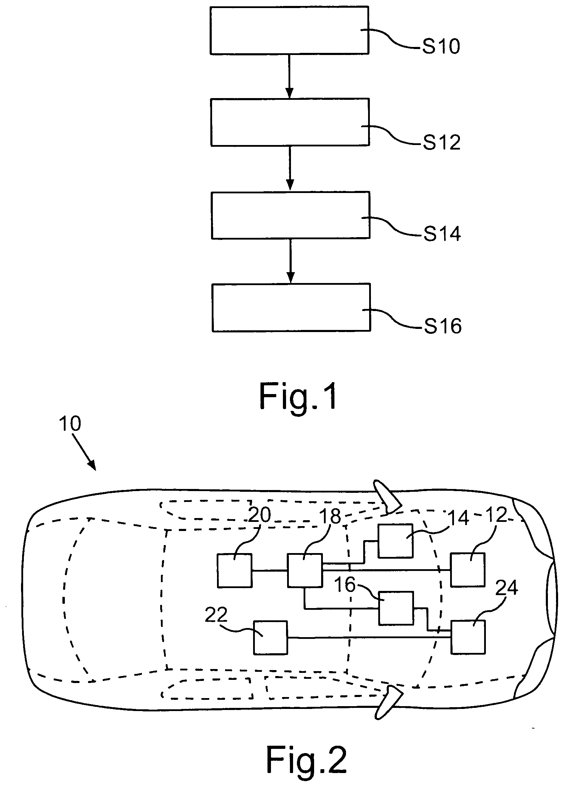

In Fig. 1 ist ein schematischer Ablaufplan des erfindungsgemäßen Verfahrens zum Identifizieren eines ersten Fahrzeugs bei einer Fahrzeug-zu-Fahrzeug-Kommunikation dargestellt. Dabei werden in einem Schritt S10 Fahrzeugdaten durch das zumindest eine erste Fahrzeug bzw. das Fremdfahrzeug ausgesendet. Diese Fahrzeugdaten umfassen eine Information über die Position, die Geschwindigkeit und/oder die Fahrtrichtung des ersten Fahrzeugs. Zusätzlich ist es vorgesehen, dass die Fahrzeugdaten zumindest eine Information umfassen, die eine von außen erfassbare optische Eigenschaft des zumindest einen ersten Fahrzeugs betrifft. Eine solche von außen erfassbare optische Eigenschaft kann beispielsweise eine Farbe von zumindest einer Außenfläche des Fahrzeugs sein. So kann beispielsweise die Farbe des Lacks berücksichtigt werden. In gleicher Weise können die Farbe von entsprechenden Außenteilen bzw. Teilen der Außenhülle des Fahrzeugs berücksichtigt werden. Als eine von außen erfassbare optische Eigenschaft kann auch eine Kontur von zumindest einer Außenfläche des Fahrzeugs berücksichtigt werden. Des Weiteren kann als eine von außen erfassbare optische Eigenschaft der Reflexionsgrad von zumindest einer Außenfläche des Fahrzeugs berücksichtigt werden.

Die Fahrzeugdaten, die von dem zumindest einen ersten Fahrzeug ausgesendet werden, werden bei der Fahrzeug-zu-Fahrzeug-Kommunikation über ein Funknetz, beispielsweise WLAN oder UMTS übertragen. In einem weiteren Schritt S12 werden diese ausgesendeten Fahrzeugdaten durch ein zweites Fahrzeug bzw. das Eigenfahrzeug empfangen.

In einem Schritt S14 umfasst das zweite Fahrzeug mit seinem Umfeldsensor das Umfeld des zweiten Fahrzeugs, um entsprechende Umfelddaten zu gewinnen. Dabei kann das zweite Fahrzeug bzw. das Eigenfahrzeug das Umfeld bevorzugt mit einer Videokamera erfassen. Ebenso sind auch andere Feldsensoren, wie beispielsweise Radarsensoren, Lidarsensoren oder dergleichen denkbar. Das zweite Fahrzeug kann mit seinem Umfeldsensor auch das zumindest eine erste Fahrzeug in seinem Umfeld erfassen. Hierbei sollen mit dem Umfeldsensor, insbesondere mit der Videokamera, genau die von außen erfassbaren optischen Eigenschaften des zumindest einen ersten Fahrzeugs erfasst werden, die auch von dem zumindest einen ersten Fahrzeug ausgesendet werden und die von dem zweiten Fahrzeug empfangen werden. So kann beispielsweise mit dem Umfeldsensor die Farbe, die Kontur und/oder der Reflexionsgrad zumindest einer Außenfläche des zumindest einen ersten Fahrzeugs erfasst werden.

In einem Schritt S16 wird das zumindest eine erste Fahrzeug mit dem zweiten Fahrzeug anhand der empfangnen Fahrzeugdaten und der Umfelddaten identifiziert. Zu diesem Zweck werden in dem zweiten Fahrzeug bzw. in dem Eigenfahrzeug die Fahrzeugdaten, die entsprechende Informationen umfassen, die eine von außen erfassbare optische Eigenschaft des Fremdfahrzeugs betreffen, mit dem zweiten Fahrzeug bzw. dem Eigenfahrzeug empfangen. Diese Fahrzeugdaten werden mit den Daten verglichen bzw. abgeglichen, die mit dem Eigenfahrzeug durch den Umfeldsensor erfasst werden. Anhand der Informationen über die Position, die Geschwindigkeit und die Fahrtrichtung des Fremdfahrzeugs und den zusätzlichen Abgleich der Fahrzeugdaten und der Umfelddaten, die eine Auskunft über das Äußere bzw. die Außenhülle des Fahrzeugs geben, kann das zumindest eine Fremdfahrzeug besonders genau identifiziert werden.

Fig. 2 zeigt eine schematische Darstellung eines Fahrzeugs 10 in einer Draufsicht. Das Fahrzeug 10 umfasst eine Empfangseinrichtung 12, die dazu ausgebildet ist, die Fahrzeugdaten zu empfangen, die von zumindest einem weiteren Fahrzeug ausgesendet werden. Des Weiteren umfasst das Fahrzeug 10 einen Umfeldsensor 14, mit dem das Umfeld des Fahrzeugs 10 erfasst werden kann. Der Umfeldsensor 14 ist insbesondere als Kamera bzw. Videokamera ausgebildet. Der Umfeldsensor 14 ist dazu ausgebildet, zumindest ein weiteres Fremdfahrzeug zu erfassen, das sich im Umfeld des Fahrzeugs 10 befindet. Überdies umfasst das Fahrzeug 10 eine Recheneinrichtung 18, die mit der Empfangseinrichtung 12 und dem Umfeldsensor 14 gekoppelt ist. Dazu ist die Recheneinrichtung 18 mit der Empfangseinrichtung 12 und dem Umweltsensor 14 über eine entsprechende Datenleitung verbunden. Die Recheneinrichtung 18 ist dazu ausgebildet, anhand der Fahrzeugdaten, die von der Empfangseinrichtung 12 an sie übertragen werden, und anhand der Umfelddaten, die von dem Umfeldsensor 14 an sie übertragen werden, zumindest ein Fremdfahrzeug zu identifizieren.

Überdies ist die Empfangseinrichtung 12 dazu ausgebildet, Fahrzeugdaten zu empfangen, die zumindest eine Information umfassen, die eine von außen erfassbare optische Eigenschaften des zumindest einen weiteren Fahrzeugs betrifft. Überdies umfasst das Fahrzeug 10 eine Prüfeinrichtung 20, die mit der Recheneinrichtung 18 gekoppelt ist. Die Prüfeinrichtung 20 ist dazu ausgebildet, eine von außen erfassbare optische Eigenschaft des zumindest einen weiteren Fahrzeugs anhand der Umfelddaten zu identifizieren. Dazu werden mit der Prüfeinrichtung 20 die Fahrzeugdaten der Empfangseinrichtung 12 und die Umfelddaten des Umfeldsensors 14 vergleichen bzw. abgeglichen. Stimmen die Fahrzeugdaten und die Umfelddaten, die jeweils eine von außen erfassbare optische Eigenschaft der Fahrzeughülle betreffen, überein, so kann zumindest ein Fremdfahrzeug eindeutig identifiziert werden. Die Prüfeinrichtung 20 kann auch direkt mit der Empfangseinrichtung 12 und dem Umfeldsensor 14 über eine entsprechende Datenleitung verbunden sein.

Des Weiteren umfasst das Fahrzeug 10 eine Ortungseinrichtung 16, die beispielsweise einem satellitenbasierten Ortungssystem zugeordnet ist. Die Ortungseinrichtung 16 ist mit der Recheneinrichtung 18 verbunden. Somit können zusätzlich Informationen bezüglich der Position, Geschwindigkeit und Fahrtrichtung des Fahrzeugs 10 mit den Informationen, die die Position und die Geschwindigkeit von zumindest einem Fremdfahrzeug betreffen, die mit der Empfangseinrichtung 12 empfangen werden, in der Recheneinrichtung 18 abgeglichen werden. Die Ortungseinrichtung 16 ist zudem mit einer Sendeeinrichtung 24 gekoppelt. Diese Sendeeinrichtung 24 ist wiederum mit einer Speichereinrichtung 22 verbunden. Auf der Speichereinrichtung 22 sind Daten hinterlegt bzw. gespeichert, die Informationen beinhalten, die zumindest eine von außen optisch erfassbare Eigenschaft des Fahrzeugs 10 betreffen. Damit können mit der Sendeeinheit 22 Fahrzeugdaten ausgesendet werden, die Informationen über die aktuelle Position bzw. die Geschwindigkeit und zudem Informationen über eine zumindest optisch erfassbare Eigenschaft des Fahrzeugs 10 beinhalten.

Das Fahrzeug 10 umfasst somit eine Empfangseinrichtung 12 und eine Sendeeinrichtung 24 und ist somit dazu ausgebildet, an einer Fahrzeug-zu-Fahrzeug-Kommunikation teilzunehmen. Durch die zusätzlichen Informationen, die zumindest eine von außen erfassbare optische Eigenschaft des Fahrzeugs 10 betreffen, können den Fremdfahrzeugen genauere Informationen bezüglich des eigenen Fahrzeugs 10 bereitgestellt werden. Ebenso können Informationen, die die von außen erfassbaren optischen Eigenschaften der Fremdfahrzeuge betreffen, mit dem Fahrzeug 10 über die Empfangseinrichtung 12 empfangen werden und somit die Fremdfahrzeuge besonders zuverlässig identifiziert werden.

## Patentansprüche

1. Verfahren zum Identifizieren eines ersten Fahrzeugs bei einer Fahrzeug-zu-Fahrzeug-Kommunikation durch
- Aussenden von Fahrzeugdaten durch zumindest ein erstes Fahrzeug (S10),
- Empfangen der ausgesendeten Fahrzeugdaten durch eine Empfangseinrichtung (12) eines zweiten Fahrzeugs (10) (S12), wobei die Fahrzeugdaten zumindest eine Information umfassen, die eine von außen erfassbare optische Eigenschaft des zumindest einen ersten Fahrzeugs betrifft,
- Erfassen des zumindest einen ersten Fahrzeugs anhand von mit einem Umfeldsensor (14) des zweiten Fahrzeugs (10) erfassten Umfelddaten (S14), und
- Identifizieren des zumindest einen ersten Fahrzeugs mit einer Recheneinrichtung (18) des zweiten Fahrzeugs (10), die mit der Empfangseinrichtung (12) und dem Umfeldsensor (14) gekoppelt ist, anhand der Fahrzeugdaten und der Umfelddaten (S16), wobei
- die von außen erfassbare optische Eigenschaft des zumindest einen ersten Fahrzeugs anhand der Umfelddaten zum Identifizieren des zumindest einen ersten Fahrzeugs von einer Prüfeinrichtung (20) des zweiten Fahrzeugs (10) überprüft wird,
**dadurch gekennzeichnet, dass**
- als die zumindest eine Information, die eine von außen erfassbare optische Eigenschaft des zumindest einen ersten Fahrzeugs betrifft, ein einen Reflexionsgrad von zumindest einer Außenfläche des zumindest einen ersten Fahrzeugs betreffender Reflexionswert ausgesendet wird, wobei der Reflexionswert die optischen Eigenschaften des Lacks des zumindest einen ersten Fahrzeugs betrifft.

2. Verfahren nach Anspruch 1,
**dadurch gekennzeichnet, dass**
als die zumindest eine Information, die eine von außen erfassbare optische Eigenschaft des zumindest einen ersten Fahrzeugs betrifft, ein eine Farbe von zumindest einer Außenfläche des zumindest einen ersten Fahrzeugs betreffender Farbwert ausgesendet wird.

3. Verfahren nach Anspruch 1 oder 2,
**dadurch gekennzeichnet, dass**
als die zumindest eine Information, die eine von außen erfassbare optische Eigenschaft des zumindest einen ersten Fahrzeugs betrifft, ein eine Kontur von zumindest einer Außenfläche des zumindest einen ersten Fahrzeugs betreffender Konturwert ausgesendet wird.

4. Verfahren nach einem der vorhergehenden Ansprüche,
**dadurch gekennzeichnet, dass**
die Fahrzeugdaten zusätzlich eine Information von zumindest einem Identifikationselement des zumindest einen ersten Fahrzeugs umfassen und diese Information anhand der Umfelddaten zum Identifizieren des zumindest einen ersten Fahrzeugs von dem zweiten Fahrzeug überprüft werden.

5. Verfahren nach einem der vorhergehenden Ansprüche,
**dadurch gekennzeichnet, dass**
die Fahrzeug-zu-Fahrzeug-Kommunikation zwischen dem zumindest einen ersten Fahrzeug und dem zweiten Fahrzeug (10) angepasst wird, wenn das zumindest eine erste Fahrzeug identifiziert ist.

6. Verfahren nach einem der vorhergehenden Ansprüche,
**dadurch gekennzeichnet, dass**
ein Fahrerassistenzsystem des zweiten Fahrzeugs (10) in Abhängigkeit von dem Identifizieren des zumindest einen ersten Fahrzeugs angesteuert wird.

7. Fahrzeug (10) mit
- einer Empfangseinrichtung (12) zum Empfangen von zumindest einem weiteren Fahrzeug ausgesendeter Fahrzeugdaten, wobei die Empfangseinrichtung (12) dazu ausgebildet ist, Fahrzeugdaten zu empfangen, die zumindest eine Information umfassen, die eine von außen erfassbare optische Eigenschaft des zumindest einen weiteren Fahrzeugs betrifft,
- einem Umfeldsensor (14) zum Erfassen des zumindest einen weiteren Fahrzeugs anhand dessen Umfelddaten,
- einer Recheneinrichtung (18), die mit der Empfangseinrichtung (12) und dem Umfeldsensor (14) gekoppelt ist, zum Identifizieren des zumindest einen weiteren Fahrzeugs anhand der Fahrzeugdaten und der Umfelddaten, und
- einer Prüfeinrichtung (20), die dazu ausgebildet ist, die von außen erfassbare optische Eigenschaft des zumindest einen weiteren Fahrzeugs anhand der Umfelddaten zum Identifizieren des zumindest einen weiteren Fahrzeugs von dem Fahrzeug (10) zu überprüfen,
**dadurch gekennzeichnet, dass**
- die Empfangseinrichtung (12) dazu ausgebildet ist, als die zumindest eine Information, die eine von außen erfassbare optische Eigenschaft des zumindest einen weiteren Fahrzeugs betrifft, einen einen Reflexionsgrad von zumindest einer Außenfläche des zumindest einen weiteren Fahrzeugs betreffenden Reflexionswert zu empfangen, wobei der Reflexionswert die optischen Eigenschaften des Lacks des zumindest einen ersten Fahrzeugs betrifft.

8. Fahrzeug (10) nach Anspruch 7,
**dadurch gekennzeichnet, dass**
das Fahrzeug eine Speichereinrichtung (22) umfasst, auf der Fahrzeugdaten gespeichert sind, die zumindest eine Information umfassen, die eine von außen erfassbare optische Eigenschaft des Fahrzeugs (10) betrifft, und dass das Fahrzeug (10) eine Sendeeinrichtung (24) umfasst, die dazu ausgebildet ist, die Fahrzeugdaten auszusenden.

9. Fahrzeug (10) nach Anspruch 7 oder 8,
**dadurch gekennzeichnet, dass**
das Fahrzeug eine Videokamera als den Umfeldsensor (14) umfasst.

## Claims

1. Method for identifying a first vehicle during vehicle-to-vehicle communication by
- emitting vehicle data by at least one first vehicle (S10),
- receiving the emitted vehicle data by a receiving device (12) of a second vehicle (10) (S12), wherein the vehicle data comprise at least one information item which relates to a visual property of the at least one first vehicle which can be detected from the outside,
- detecting the at least one first vehicle using environment data (S14) which can be detected with an environment sensor (14) of the second vehicle (10), and
- identifying the at least one first vehicle with a calculation device (18) of the second vehicle (10) which is coupled to the receiving device (12) and the environment sensor (14) using the vehicle data and the environment data (S16), wherein
- the visual property of the at least one first vehicle which can be detected from the outside is checked by a checking device (20) of the second vehicle (10) using the environment data to identify the at least one first vehicle, **characterised in that**
- a reflection value relating to a degree of reflection of at least one outer surface of the at least one first vehicle is emitted as the at least one information item which relates to the visual property of the at least one first vehicle which can be detected from the outside, wherein the reflection value relates to the visual properties of the paint of the at least one first vehicle.

2. Method according to claim 1,
**characterised in that**
a colour value relating to the colour of at least one outer surface of the at least one first vehicle is emitted as the at least one information item which relates to the visual property of the at least one first vehicle which can be detected from the outside.

3. Method according to claim 1 or 2,
**characterised in that**
a contour value relating to a contour of at least one outer surface of the at least one first vehicle is emitted as the at least one information item which relates to the visual property of the at least one first vehicle which can be detected from the outside.

4. Method according to any one of the preceding claims,
**characterised in that**
the vehicle data additionally comprise an information item of at least one identification element of the at least one first vehicle and this information is checked by the second vehicle using the environment data for identifying at least one first vehicle.

5. Method according to any one of the preceding claims,
**characterised in that**
the vehicle-to-vehicle communication between the at least one first vehicle and the second vehicle (10) is adapted when the at least one first vehicle is identified.

6. Method according to any one of the preceding claims,
**characterised in that**
a vehicle assistance system of the second vehicle (10) is controlled subject to the identification of the at least one first vehicle.

7. Vehicle (10) with
- a receiving device (12) for receiving vehicle data emitted from at least one further vehicle, wherein the receiving device (12) is configured such that the vehicle data to be received comprise the at least one information item relates to the visual property of the at least one first vehicle which can be detected from the outside,
- an environment sensor (14) for detecting the at least one further vehicle using its environment data,
- a calculation device (18) which is coupled to the receiving device (12) and the environment sensor (14) for identifying the at least one further vehicle using the vehicle data and the environment data, and
- a checking device (20) which is configured to check the visual property of the at least one further vehicle which can be detected from the outside using the environment data for identifying the at least one further vehicle from the vehicle (10), **characterised in that**
- the receiving device (12) is configured to receive a reflection value relating to a degree of reflection from at least one outer surface of the at least one further vehicle as the at least one information item which relates to a visual property of the at least one first vehicle which can be detected from the outside, wherein the reflection value relates to the visual properties of the paint of the at least one first vehicle.

8. Vehicle (10) according to claim 7,
**characterised in that**
the vehicle comprises a storage device (22) on which vehicle data are stored which comprise at least one information item which relates to a visual property of the vehicle (10) which can be detected from the outside, and **in that** the vehicle (10) comprises an emitting device (24) which is configured to emit the vehicle data.

9. Vehicle (10) according to claim 7 or 8,
**characterised in that**
the vehicle comprises a video camera as the environment sensor (14).

## Revendications

1. Procédé servant à identifier un premier véhicule lors d'une communication de véhicule à véhicule en
- envoyant des données de véhicule par au moins un premier véhicule (S10),
- recevant les données de véhicule envoyées par un dispositif de réception (12) d'un deuxième véhicule (10) (S12), dans lequel les données de véhicule comprennent au moins une information, qui concerne une propriété optique, pouvant être détectée de l'extérieur, de l'au moins un premier véhicule,
- détectant l'au moins un premier véhicule à l'aide de données d'environnement détectées avec un capteur d'environnement (14) du deuxième véhicule (10) (S14), et
- identifiant l'au moins un premier véhicule avec un dispositif de calcul (18) du deuxième véhicule (10), qui est couplé au dispositif de réception (12) et au capteur d'environnement (14), à l'aide des données de véhicule et des données d'environnement (S16), dans lequel
- la propriété optique, pouvant être détectée de l'extérieur, de l'au moins un premier véhicule est surveillée à l'aide des données d'environnement servant à identifier l'au moins un premier véhicule par un dispositif de contrôle (20) du deuxième véhicule (10),
**caractérisé en ce que**
- une valeur de réflexion concernant un degré de réflexion d'au moins une surface extérieure de l'au moins un premier véhicule est envoyée en tant que l'au moins une information, qui concerne une propriété optique, pouvant être détectée de l'extérieur, de l'au moins un premier véhicule, dans lequel la valeur de réflexion concerne les propriétés optiques de la peinture de l'au moins un premier véhicule.

2. Procédé selon la revendication 1,
**caractérisé en ce que**
une valeur de couleur concernant une couleur d'au moins une surface extérieure de l'au moins un premier véhicule est envoyée en tant que l'au moins une information, qui concerne une propriété optique, pouvant être détectée de l'extérieur, de l'au moins un premier véhicule.

3. Procédé selon la revendication 1 ou 2,
**caractérisé en ce que**
une valeur de contour concernant un contour d'au moins une surface extérieure de l'au moins un premier véhicule est envoyée en tant que l'au moins une information, qui concerne une propriété optique, pouvant être détectée de l'extérieur, de l'au moins un premier véhicule.

4. Procédé selon l'une quelconque des revendications précédentes,
**caractérisé en ce que**
les données de véhicule comprennent en plus une information d'au moins un élément d'identification de l'au moins un premier véhicule et ces informations sont vérifiées par le deuxième véhicule à l'aide des données d'environnement servant à identifier l'au moins un premier véhicule.

5. Procédé selon l'une quelconque des revendications précédentes,
**caractérisé en ce que**
la communication de véhicule à véhicule entre l'au moins un premier véhicule et le deuxième véhicule (10) est adaptée quand l'au moins un premier véhicule est identifié.

6. Procédé selon l'une quelconque des revendications précédentes,
**caractérisé en ce que**
un système d'assistance au conducteur du deuxième véhicule (10) est piloté en fonction de l'identification de l'au moins un premier véhicule.

7. Véhicule (10) avec
- un dispositif de réception (12) servant à recevoir des données de véhicule envoyées par au moins un autre véhicule, dans lequel le dispositif de réception (12) est réalisé pour recevoir des données de véhicule, qui comprennent au moins une information, qui concerne une propriété optique, pouvant être détectée de l'extérieur, de l'au moins un autre véhicule,
- un capteur d'environnement (14) servant à détecter l'au moins un autre véhicule à l'aide de ses données d'environnement,
- un dispositif de calcul (18), qui est couplé au dispositif de réception (12) et au capteur d'environnement (14), servant à identifier l'au moins un autre véhicule à l'aide des données de véhicule et des données d'environnement, et
- un dispositif de contrôle (20), qui est réalisé pour surveiller la propriété optique, pouvant être détectée de l'extérieur, de l'au moins un autre véhicule à l'aide des données d'environnement servant à identifier l'au moins un autre véhicule par le véhicule (10),
**caractérisé en ce que**
- le dispositif de réception (12) est réalisé pour recevoir une valeur de réflexion concernant un degré de réflexion d'au moins une surface extérieure de l'au moins un autre véhicule en tant que l'au moins une information, qui concerne une propriété optique, pouvant être détectée de l'extérieur, de l'au moins un autre véhicule, dans lequel la valeur de réflexion concerne les propriétés optiques de la peinture de l'au moins un premier véhicule.

8. Véhicule (10) selon la revendication 7,
**caractérisé en ce que**
le véhicule comprend un dispositif de mémoire (22), sur lequel des données de véhicule sont mémorisées, qui comprennent au moins une information, qui concerne une propriété optique, pouvant être détectée de l'extérieur, du véhicule (10), et que le véhicule (10) comprend un dispositif d'envoi (24), qui est réalisé pour envoyer les données de véhicule.

9. Véhicule (10) selon la revendication 7 ou 8,
**caractérisé en ce que**
le véhicule comprend une caméra vidéo en tant que capteur d'environnement (14).
